# EUROPEAN PATENT SPECIFICATION

(11) **EP 3 159 449 B1**
(45) Date of publication and mention of the grant of the patent: **19.08.2020**
(21) Application number: 16197593.3
(22) Date of filing: 01.02.2006
(51) Int. Cl.: D06F 58/02, D06F 25/00, D06F 37/26, D06F 37/22

(54) **DRUM TYPE WASHING AND DRYING MACHINE**
TROMMELWASCHTROCKNER
LAVE-LINGE ET SÈCHE-LINGE À TAMBOUR

(30) Priority: 03.02.2005 KR 20050010138
(43) Date of publication of application: 26.04.2017
(62) Divisional of application: 06002074.0
(73) Proprietor: LG Electronics Inc., Seoul 07336 (KR)
(72) Inventor: LIM, Hee Tae, 420-757 Kyungki-do (KR); HONG, Sang Wook, 153-031 Seoul (KR)
(74) Representative: Ter Meer Steinmeister & Partner

(56) References cited:
- EP-A- 0 252 323
- EP-A- 1 433 890
- EP-A- 1 433 891
- EP-A- 1 486 605
- GB-A- 2 230 330
- US-A1- 2003 200 773
- US-A1- 2004 244 121

## Description

### BACKGROUND OF THE INVENTION

### Field of the Invention

The present invention relates to a drum type washing machine, and more particularly, to a drum type washing machine having a drying device, in which a tub is directly connected to a cabinet.

### Description of the Related Art

Washing machines may be broadly categorized into those having only a washing function and washing machines having washing and drying functions.

EP 0 252 323 A discloses a laundry washing and drying machine of the front loading type for domestic use, comprising a tub rotatably mounting a drum adapted to contain the laundry during the washing and drying operations. The drying section of the machine comprises a fan for directing hot air into contact with the laundry through an opening the top wall of the tub, and deflector means for dividing the major part of the hot air flow into a first and second flow directly respectively towards openings formed in the front wall of the drum and towards the loading opening of the drum, a remaining part of the hot air being permitted to diffuse in a homogeneous manner between the drum and the tub. The known machine is also provided with means for maintaining a passage for the supply of the hot air to the tub in an unopturated state. ; EP1433890 discloses a drum type washing machine according to the preamble of claim 1.

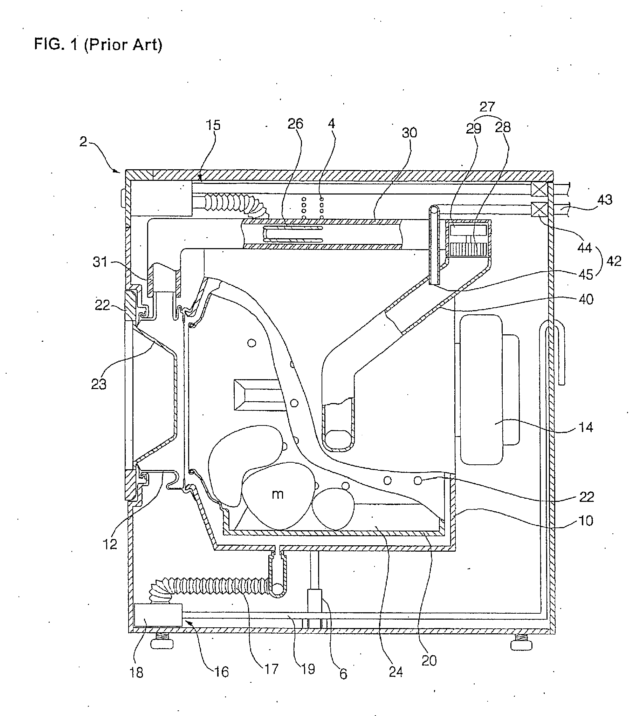

Fig. 1 is a side sectional view illustrating the inner structure of a conventional drum type washing machine having a drying device.

As shown in the drawing, the conventional drum type washing machine includes a tub 10 supported in a cabinet 2 by a spring 4 and a damper 6, a drum 20 installed in the tub 10 to accommodate laundry, a door 22 connected to the cabinet 2 to open and close the front side of the drum 20, a heater duct 30 installed at the upper side of the tub 10 to discharge hot air to the tub 10 and having a heater 26 and a blower 27, and a condensing duct 40 having one side connected to a lower side of the tub 10 and the other side connected to the heater duct 30 and condensing the humidity or moisture out of the circulated air.

A gasket 12, closely contacting the door 22 when the door 22 is closed and connected to the heater duct 30, is installed to the tub 10.

The tub 10 includes a motor 14 for rotating the drum 20.

A water supplying device 15, for supplying washing water or rinsing water into the tub 10 in washing mode or rinsing mode, is connected to the tub 10. The lower side of the tub 10 is connected to the drain device 16.

The drain device 16 includes a drain bellows 17 connected to the lower side of the tub 10, a drain pump 18 connected to the drain bellows 17, and a drain hose 19 connected to the drain pump 18.

The drum 20 has penetrating holes 22 formed in the circumference or in the rear side thereof, through which washing water and air pass.

The drum 20 includes a lifter 24 installed on the inner circumference of the drum 20 to agitate the laundry.

The blower 27 includes a circulation fan 28 rotatably installed in the heater duct 30 and a fan motor 29 installed in the heater duct 30 to rotate the circulation fan 28.

The condensing duct 40 is connected to a cooling water supply 42 for supplying cooling water to condense humidity contained in air being circulated while drying the laundry.

The cooling water supply 42 includes a cooling water valve 44 connected to an external hose and intermittently controlling the cooling water supplied through the external hose and a cooling water hose 45 for guiding the cooling water passed through the cooling water valve 44 into the condensing duct 40.

Operation of the conventional drum type washing machine having the structure as described above will be described as follows.

First, with the door 22 closed and the conventional drum type washing machine started after placing laundry in the drum 20, the conventional drum type washing machine supplies washing water through the water supply 15. The supplied washing water flows into the tub 10 and is introduced into the drum 20 through the penetrating holes 22 to wet the laundry.

After supplying the washing water, when the motor 14 is driven, the drum 20 is rotated and the laundry in the drum 20 is stirred within the drum 20, thus dirt on the laundry is separated from the laundry by the washing water. As such, after the washing cycle is completed, contaminated washing water in the tub 10 is drained out of the conventional drum type washing machine through the drain device 16.

Afterwards, the rinsing cycle for removing foam or suds remaining in the laundry is performed several times. During the rinsing cycle, the water supply 15 and the motor are controlled like the washing cycle to rinse the foam remaining in the laundry and the contaminated washing water containing foam is drained out of the conventional drum type washing machine through the drain device 16.

After several rinsing cycles, a dehydration cycle, for dehydrating the laundry using centrifugal force, is performed. The motor 14 is driven at a high speed to dehydrate the laundry and the washing water dehydrated from the laundry is drained out of the conventional drum type washing machine through the drain device 16.

Next, the conventional drum type washing machine performs a drying cycle for drying the washed laundry.

In the drying cycle, when the conventional drum type washing machine drives the motor 14 to rotate the drum 20, the laundry is agitated in the drum 20. The heater 26 is turned on to increase the temperature within the drum, the fan motor 29 is driven to rotate the circulation fan 28, and the cooling water valve 44 and the drain pump 18 are repeatedly turned on and off in a predetermined time interval.

Due to the rotation of the circulation fan 18, air in the drum 20 strikes the laundry to remove heat and moisture from the laundry and is transformed into low-temperature-and-high-humidity air. The transformed air passes through the penetrating holes 22 and flows between the drum 20 and the tub 10, and then enters the condensing duct 40. The low-temperature-and-high-humidity air is condensed by the cooling water while passing through the condensing duct 40.

The air passed through the condensing duct 40 is transformed into hot air by the heater 26 while passing through the heater 30. The hot air passes through the gasket 12 and is discharged into the inside of the gasket 16, and then is circulated in the drum 20. After that, the circulation is repeated to dry the laundry.

Meanwhile, the cooling water supplied to the condensing duct 40 passes through the condensing duct 40, is collected in the tub 10, and is periodically pumped by the drain pump 18 to be discharged from the conventional drum type washing machine.

As such, after performing the drying process using the hot air, the heater 26 is turned off, and only the drum 20 and the circulation fan 28 rotate to perform a dry process using cold air.

When the dry process using cold air is performed for a predetermined time, the conventional drum type washing machine stops the circulation fan 28 and the motor 14 to finish the drying process.

However, as described above, according to the conventional drum type washing machine having a drying device, since an inlet duct 31, connected to the heater duct 30, is connected to the gasket 12, a space between the cabinet 2 and the tub 10 is needed, so that the size of the conventional drum type washing machine is increased.

Moreover, since a part of air discharged through the inlet duct 31 is directly introduced into the tub 10 through an opening formed between the tub 10 and the drum 20 without passing through the interior of the drum 20 and is discharged, the efficiency of laundry drying operation is deteriorated.

### SUMMARY OF THE INVENTION

Therefore, the present invention has been made in view of the above and/or other problems, and it is an object of the present invention to provide a drum type washing machine in which a tub is integrally formed with a cabinet to reduce the size of the drum type washing machine and a drying device is installed to dry laundry directly after washing the laundry.

It is another object of the present invention to provide a drum type washing machine in which a duct, through which dry air is circulated, is directly connected to the inside of a tub without passing a gasket between the tub and a drum and a drum gasket is installed between the tub and the drum, maximizing an effective flow rate of air introduced into the drum to effectively dry laundry.

In accordance with the present invention, the above and other aspects can be accomplished by the provision of drum type washing machine including a cabinet, a tub directly fixed in the cabinet, a drum, disposed in the tub, in which washing is performed, a motor disposed at the rear side of the tub to rotate the drum, a supporting device extended from a rotation shaft between the drum and the motor to the cabinet to rotatably support the drum, a buffering-and-sealing device provided at the rear side of the tub to buffer a space between the rotation shaft and the tub and to seal the rear side of the tub, and a drying device extended from one side of the tub to the other side of the tub to circulate air in the drum and to dry laundry in the drum.

Preferably, the drying device includes a circulation duct extended from the outer side of the tub to the front side of the tub, a condensing device installed near the inlet of the circulation duct to condense humidity, a blower installed in the circulation duct to compulsorily circulate air, and a heater installed in the circulation duct to heat the circulated air.

The condensing device includes a metal condensing plate installed to the inner surface of the tub to condense the humidity, and a cold water supply for supplying cold water to condense the humidity toward the condensing plate through an inlet port of the circulation duct or the tub.

The circulation duct includes an inlet duct extended from the rear upper outer side of the tub to the blower, a heater duct, in which the heater is installed, extended from an outlet duct of the blower to the front side of the tub, and a connection duct extended from the heater duct to the front side of the tub.

Preferably, the tub further includes a duct bracket for supporting the heater.

The drum type washing machine further includes gaskets respectively installed between the tub and the drum to prevent foreign matter from entering a space between the tub and the drum and to prevent the drum from colliding against the tub.

Preferably, the gaskets include a drum gasket fixed to the drum and extended toward the tub, and a tub gasket fixed to the cabinet or the tub and extended toward the drum.

An outlet port of the circulation duct is positioned between the drum gasket and the tub gasket.

The another object of the present invention is achieved by the provision of a drum type washing machine including a cabinet, a tub installed in the cabinet, a drum, disposed in the tub, in which washing is performed, a motor disposed at the rear side of the tub to rotate the drum, a drying device extended from one side of the tub to the front side of the tub to circulate air in the drum and to dry laundry in the drum, and a dry air guide member installed between the tub and the drum to guide air circulated by the drying device into the drum.

Preferably, the dry air guide member includes a gasket installed between the tub and the drum to seal an opening formed between the tub and the drum.

The gasket includes a drum gasket fixed to the drum and extended toward the tub.

Still another object of the present invention is achieved by the provision of a drum type washing machine including a cabinet, a tub directly fixed in the cabinet, a drum disposed in the tub, in which washing is performed, a motor disposed at the rear side of the tub to rotate the drum, a supporting device extended from a rotation shaft between the drum and the motor to the cabinet to rotatably support the drum, a buffering-and-sealing device provided at the rear side of the tub to buffer a space between the rotation shaft and the tub and to seal the rear side of the tub, gaskets installed between the tub and the drum to seal an opening formed between the tub and the drum, and a drying device extended from the rear side of the tub to the front side of the tub to circulate air in the drum and to dry laundry in the drum.

Preferably, the drying device includes a circulation duct extended from the outer side of the tub to a space between the gaskets, a condensing device installed near the inlet of the circulation duct to condense humidity, a blower installed in the circulation duct to compulsorily circulate air, and a heater installed in the circulation duct to heat the circulated air.

The circulation duct includes an inlet duct extended from the outer side of the tub to the blower, a heater duct, in which the heater is installed, extended from an outlet duct of the blower to the front side of the tub, and a connection duct extended from the heater duct to a space between the gaskets.

Preferably, the tub further includes a duct bracket for supporting the heater duct.

The condensing device includes a metal condensing plate installed to the side of the tub to condense the humidity, and a cold water supply for supplying cold water to condense the humidity toward the condensing plate through an inlet port of the circulation duct or the tub.

The gaskets include a drum gasket fixed to the drum and extended toward the tub, and a tub gasket fixed to the cabinet or the tub and extended toward the drum.

Preferably, outlet port, through which the circulated air is discharged from the drying device, is positioned between the drum gasket and the tub gasket.

Preferably, the gaskets are positioned between the tub and the drum and guide air circulated by the drying device into the drum.

As described above, according to the drum type washing machine according to the present invention, since the tub is integrally installed to the cabinet, the drum type washing machine can be reduced in size or the washing capacity of the drum type washing machine can be increased without increasing the size of the drum type washing machine.

Moreover, the drum type washing machine of the present invention includes the drying device so that laundry is dried directly after the washing process.

In addition, according to the drum type washing machine of the present invention, since a duct, through which dry air is circulated, is connected directly to the inside of the tub without passing through the gasket between the tub and the drum and the drum gasket is installed between the openings of the tub and the drum, the effective flow rate of air introduced into the drum is maximized so that the laundry can be more effectively dried.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a view illustrating an inner structure of a conventional drum type washing machine having a drying device;
Fig. 2 is a view illustrating an inner structure of a drum type washing machine according to a preferred embodiment of the present invention;
Fig. 3 is a perspective view illustrating main parts of the drum type washing machine according to the preferred embodiment of the present invention; and
Fig. 4 is a partially sectional perspective view of a portion "A" in Fig. 3.

### DESCRIPTION OF THE PREFERRED EMBODIMENTS

The present invention is further described in the detailed description which follows, by reference to the noted plurality of drawings by way of non-limiting examples of preferred embodiments of the present invention, in which like reference numerals represent similar parts throughout the several views of the drawings.

Hereinafter, the preferred embodiments of the drum type washing machine according to the present invention will be described in detail with reference to the accompanying drawings.

Although several embodiments of the drum type washing machines according to the present invention are possible, hereinafter, only the drum type washing machine according to the preferred embodiment of the present invention will be described.

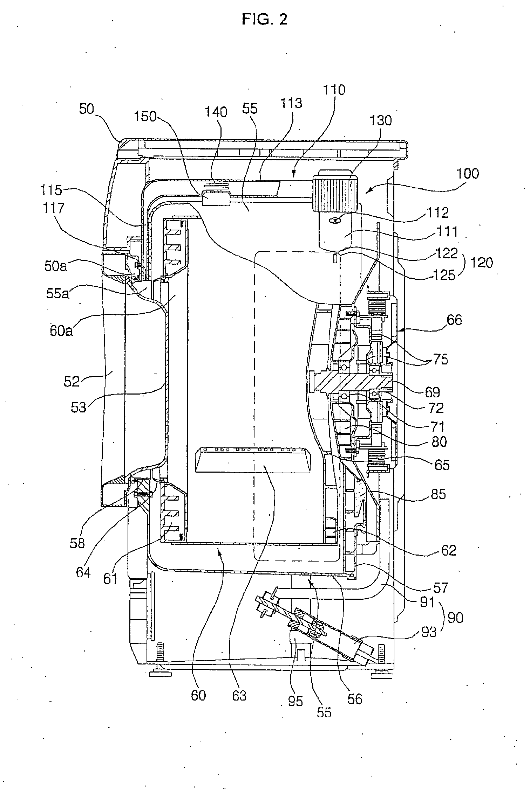

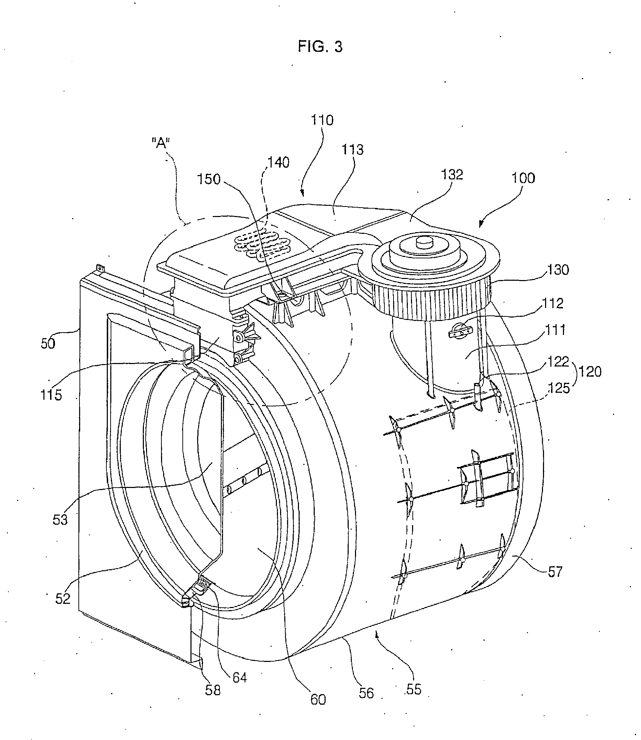

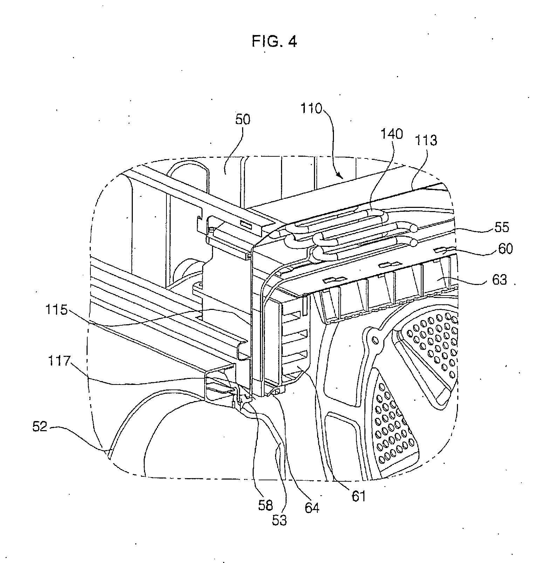

Fig. 2 is a view illustrating an inner structure of the drum type washing machine according to the preferred embodiment of the present invention. Fig. 3 is a perspective view illustrating main parts of the drum type washing machine according to the preferred embodiment of the present invention, and Fig. 4 is a partially sectional perspective view of a portion "A" in Fig. 3.

As shown in the drawings, the drum type washing machine according to the preferred embodiment of the present invention includes a rectangular box-shaped cabinet 50 to which a tub 55 for accommodating washing water is directly connected. In other words, although, in the conventional drum type washing machine, a tub is connected to a cabinet by a spring and a damper, in the drum type washing machine according to the preferred embodiment of the present invention, the tub 55 is directly fixed to the cabinet 50 without a damper.

As such, a drum 60, in which the tub 55 is directly installed and the laundry is washed, and vibration generating elements, such as a motor 66 for rotating the drum 60, are supported in the cabinet 50 by a supporting device, including a bearing housing 75 and a suspension 90 which are described later, such that vibration generated when the drum 60 is rotated can be reduced.

In other words, the drum 60 is connected to the motor 66 via a rotation shaft 69 and is rotated by the motor 66. Between the drum 60 and the motor 66, a bearing housing 75, including bearings 71 and 72, which comprise supporting devices for supporting the rotation shaft 69, is installed. The suspension 90 is connected to the bearing housing 75 such that elements subject to vibration, such as the drum 60, the motor 66, and the like, are supported in the cabinet 50 by the bearing housing 75.

In front of the bearing housing 75, a buffering-and-sealing device is provided at the rear side of the tub 55 to buffer a space between the rotation shaft 69 and the tub 55 and to seal the rear side of the tub 55. The buffering-and-sealing device includes a bracket 80 for forming the rear side of the tub 55, and a rear gasket 85 installed between the bracket 80 and the rear portion of the tub 55 to prevent vibration from being transmitted from the vibration generating elements to the tub 55 and to prevent water accommodated in the tub 55 from leaking.

The cabinet 50, the tub 55, and the drum 60 have respective openings 50a, 55a, and 60a, formed therein, through which the laundry is placed and withdrawn. Gaskets 58 and 64 are respectively installed between the tub 55 and the drum 60 to prevent foreign matter from entering the space between the tub 55 and the drum 60 and to prevent the drum 60 from colliding with the tub 55 during the washing process and the dehydrating process (i.e., spinning and/or drying).

Especially, the drum type washing machine according to the preferred embodiment of the present invention further includes a drying device 100 for drying the washed laundry.

The drying device 100 extends from the rear upper side of the tub 55 to the front side of the tub 55, i.e., towards the gaskets 58 and 64, to dry the laundry in the drum 60 by circulating air in the drum 60.

Main parts of the drum type washing machine having the structure as described above will be described in detail as follows.

The cabinet 50 is preferably formed in a rectangular box-shape like that of the conventional drum type washing machine, and includes a door 52 installed at the front side thereof to open and close the tub 55.

The tub 55 includes a tub main body 56 directly fixed to the front side of the cabinet 50, and a ring-shaped tub cover 57, which is installed at the rear side of the tub main body 56 and includes an intermediate part where the bracket 80 and the rear gasket 85 are positioned.

The drum 60 is supported such that the rear part of the drum 60 is connected to the rotation shaft 69, and has a hub 65 to which the rotation shaft 69 is connected. The drum 60 includes a plurality of lifters 63 installed at the inner side thereof to raise and release the laundry in the drum 60. The drum 60 further includes balancers 61 and 62 installed at the front and rear sides of the drum 60 to balance the drum 60 during the rotation of the drum 60.

The suspension 90 includes a damper bracket 91 connected to the bearing housing 75 and dampers 93 and 95 installed between the damper bracket 91 and a base of the cabinet 50, in which the main damper 93, located between the dampers 93, is installed at an angle and the sub-dampers 95, located at both lateral sides of the main damper 93, are installed an a right angle so as to absorb vibration generated from the vibration elements.

The gaskets include a tub gasket 58 fixed to the cabinet 50 or the tub 55 and extending toward the drum 60, and a drum gasket 64 fixed to the drum 60 and extending toward the tub 55.

Here, the drum gasket 64 serves as a dry air guide member to guide air circulated by the drying device 100 into the drum 60.

The drying device 100 includes a circulation duct 110 extended from the outer side of the tub 55 to the front side of the tub 55, a condensing device 120 installed near to the inlet of the circulation duct 110 to condense humidity, a blower 130 installed in the circulation duct 110 to forcibly circulate air, and a heater 140 installed in the circulation duct 110 to heat the circulated air.

The circulation duct 110 includes an inlet duct 111 extended from the rear upper outer side of the tub 55 to the blower 130, a heater duct 113, in which the heater 140 is installed, extended from an outlet duct 132 of the blower 130 to the front side of the tub 55, and a connection duct 115 extended from the heater duct 113 to the front side of the tub 55.

Here, the inlet duct 111 includes a temperature sensor 112 for detecting the temperature of the circulated air, the tub 55 includes a duct bracket 150, installed at the upper side of the tub 55, for supporting the heater duct 113 to be spaced apart from the tub 55 so as to prevent heat generated by the heater 140 from being radiated to the tub 55.

One end of the connection duct 115 serving as an outlet port 117 of the circulation duct 110, as shown in Fig. 4, is positioned between the drum gasket 64 and the tub gasket 58.

The condensing device 120 includes a metal condensing plate 125 installed to the inner surface of the tub 55 to condense humidity, and a cold water supply 122 for supplying cold water to condense humidity to the condensing plate 125 through an inlet port of the circulation duct 110 or the tub 55.

Operation of the drum type washing machine having the structure as described above according to the preferred embodiment of the present invention will be described as follows.

According to the drum type washing machine in accordance with the preferred embodiment of the present invention, since the tub 55 is directly installed to the cabinet 50, the size of the tub 55 can be maximized without increasing the volume of the cabinet even when the cabinet 50 has the same volume as that of the cabinet of the conventional drum type washing machine. Thus, since the drum 60 installed in the tub 55 can also be relatively increased in size, the washing capacity of the drum type washing machine according to the preferred embodiment of the present invention can be increased without increase of the size of the cabinet 50.

In the drum type washing machine according to the preferred embodiment of the present invention, when the drying process is performed after the dehydration process, the drum 60 rotates at low speed. Simultaneously, the blower 130 and the heater 140 are driven to supply and circulate the hot air, thereby drying the laundry.

In other words, the hot air heated by the heater while passing through the heater duct 113 is discharged into the tub 55 via the connection duct 115, the discharged hot air is reflected by a door glass 53 and is introduced to the drum 60 to dry the laundry.

Meanwhile, since, between the drum 60 and the tub 55, the drum gasket 64 is installed to the drum 60 and extends toward the tub 55 to serve as a guide member for guiding the dry air, the majority of the hot air discharged from the connection duct 115 is introduced into the drum 60 to dry the laundry and flows out toward the tub 55. Thus, since the quantity of air, which is discharged from the connection duct 115 and is directly introduced into the tub 55, is minimized due to the drum gasket 64, the drying effect of the laundry is enhanced.

As such, the humid air, generated by drying the laundry in the drum 60, passes through the holes formed in the front and rear sides of the drum and contact the condensing plate 125 installed at the side of the tub 55 such that the high-temperature-and-humid air is condensed and discharged from the drum type washing machine through the drain device provided in the bottom of the tub 55. At that time, since the condensing plate 125 is continuously or intermittently supplied with water by the cold water supply 125, the condensing plate 125 is maintained at a low temperature and condenses the humid air.

As such, the air loses a predetermined quantity of humidity as it passes through the blower 130 and is introduced into the heater duct 113. The heater 140 heats the air again, and the heated air is supplied to the drum 60 to further dry the laundry.

As described above, according to the drum type washing machine according to the present invention, since the tub is integrally installed to the cabinet, the drum type washing machine can be reduced in size or the washing capacity of the drum type washing machine can be increased without increasing the size of the drum type washing machine.

Moreover, the drum type washing machine of the present invention includes the drying device so that laundry is dried directly after the washing process.

In addition, according to the drum type washing machine of the present invention, since a duct, through which dry air is circulated, is connected directly to the inside of the tub without passing through the gasket between the tub and the drum and the drum gasket is installed between the openings of the tub and the drum, the effective flow rate of air introduced into the drum is maximized so that the laundry can be more effectively dried.

Although the invention has been described with reference to an exemplary embodiment, it is understood that the words that have been used are words of description and illustration, rather than words of limitation. Changes may be made, within the purview of the appended claims, as presently stated and as amended, without departing from the scope and spirit of the present invention in its aspects. Although the invention has been described herein with reference to particular means, materials and embodiments, the invention is not intended to be limited to the particulars disclosed herein. Instead, the invention extends to all functionally equivalent structures, methods and uses, such as are within the scope of the appended claims.

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

## Claims

1. A drum type washing machine comprising:
- a cabinet (50);
- a tub (55) disposed in the cabinet (50) and directly fixed to the cabinet (50),
- a drum (60) disposed in the tub (55) in which washing is performed; and **characterized in that**
- a drying device (100) is disposed on an upper side of the tub (55)
whereby the drying device (100) extends from a rear upper side of the tub (55) to a front side of the tub (55) to circulate air in the drum and to dry laundry in the drum (60).

2. The drum type washing machine as claimed in claim 1, wherein the drying device (100) comprises:
- a circulation duct (100) that extends from the rear side of the tub (55) to the front side of the tub (55);
- a blower (130) installed in the circulation duct (110) to forcibly circulate air; and
- a heater (140) installed in the circulation duct (110) to heat the circulated air.

3. The drum type washing machine as claimed in claim 2, wherein the circulation duct comprises:
- an inlet duct (111) that extends from an rear upper side of the tub (55) to the blower (130); and
- a heater duct (113) in which the heater (140) is installed that extends from an outlet duct of the blower (130) towards the front side of the tub.

4. The drum type washing machine as claimed in claim 3, wherein the circulation duct further comprises a connection duct (115) that extends from the heater duct to the front side of the tub (55).

5. The drum type washing machine as claimed in any one of the preceding claims, further comprises:
- a cold water supply (122) for supplying cold water to an inside of the tub through an inlet port of the tub (55) to condense the moisture in the air.

6. The drum type washing machine as claimed in any one of the claims 3 to 5, wherein the tub (55) further comprises a duct bracket (150) for supporting the heater duct (113).

7. The drum type washing machine as claimed in any one of the preceding claims, further comprising a gasket (58, 64) installed between the tub and the drum to prevent foreign matter from entering a space between the tub (55) and the drum (60).

8. The drum type washing machine as set forth in claim 7, wherein an outlet port (117) of the circulation duct (110) is positioned on an upper side of the gasket (58, 64).

9. The drum type washing machine as claimed in any one of the preceding claims, further comprises a dry air guide member installed between the tub (55) and the drum (60) to guide air circulated by the drying device (100) into the drum (60).

10. The drum type washing machine as claimed in claim 9, wherein the dry air guide member comprises a gasket (64) installed between the tub (55) and the drum (60) to seal an opening formed between the tub (55) and the drum (60).

11. The drum type washing machine as claimed in any one of the preceding claims, further comprising a condensing device which comprises:
- a metal condensing plate (125) installed to a side of the tub (55); and
- a cold water supply (122) for supplying cold water to the condensing plate (125) through an inlet port of the circulation duct (110) or the tub (55) to condense the moisture in the air.

## Patentansprüche

1. Trommelwaschmaschine, die Folgendes umfasst:
- ein Gehäuse (50);
- einen Bottich (55), der in dem Gehäuse (50) angeordnet ist und direkt an dem Gehäuse (50) fixiert ist, und
- eine Trommel (60), die in dem Bottich (55) angeordnet ist und in der das Waschen durchgeführt wird,
**dadurch gekennzeichnet, dass**
- eine Trocknungsvorrichtung (100) an einer Oberseite des Bottichs (55) angeordnet ist, wobei sich die Trocknungsvorrichtung (100) von einer hinteren Oberseite des Bottichs (55) zu einer Vorderseite des Bottichs (55) erstreckt, um Luft in der Trommel umzuwälzen und Wäsche in der Trommel (60) zu trocknen.

2. Trommelwaschmaschine nach Anspruch 1, wobei die Trocknungsvorrichtung (100) Folgendes umfasst:
- einen Umluftkanal (100), der sich von der Rückseite des Bottichs (55) zu der Vorderseite des Bottichs (55) erstreckt;
- ein Gebläse (130), das in dem Umluftkanal (110) installiert ist, um Luft zwangsweise umzuwälzen; und
- ein Heizelement (140), das in dem Umluftkanal (110) installiert ist, um die Umluft zu heizen.

3. Trommelwaschmaschine nach Anspruch 2, wobei der Umluftkanal Folgendes umfasst:
- einen Eintrittskanal (111), der sich von einer hinteren Oberseite des Bottichs (55) zu dem Gebläse (130) erstreckt; und
- einen Heizkanal (113), in dem das Heizelement (140) installiert ist, der sich von einem Austrittskanal des Gebläses (130) zu der Vorderseite des Bottichs erstreckt.

4. Trommelwaschmaschine nach Anspruch 3, wobei der Umluftkanal ferner einen Verbindungskanal (115) umfasst, der sich von dem Heizkanal zu der Vorderseite des Bottichs (55) erstreckt.

5. Trommelwaschmaschine nach einem der vorhergehenden Ansprüche, die ferner Folgendes umfasst:
- eine Kaltwasserzufuhr (122) zum Zuführen von kaltem Wasser zu einem Innenraum des Bottichs durch eine Eintrittsöffnung des Bottichs (55), um die Feuchtigkeit in der Luft zu kondensieren.

6. Trommelwaschmaschine nach einem der Ansprüche 3 bis 5, wobei der Bottich (55) ferner eine Kanalhalterung (150) zum Halten des Heizkanals (113) umfasst.

7. Trommelwaschmaschine nach einem der vorhergehenden Ansprüche, die ferner eine Dichtung (58, 64) umfasst, die zwischen dem Bottich und der Trommel installiert ist, um zu verhindern, dass Fremdstoffe in einen Zwischenraum zwischen dem Bottich (55) und der Trommel (60) eindringen.

8. Trommelwaschmaschine nach Anspruch 7, wobei eine Austrittsöffnung (117) des Umluftkanals (110) an einer Oberseite der Dichtung (58, 64) positioniert ist.

9. Trommelwaschmaschine nach einem der vorhergehenden Ansprüche, die ferner ein Element zum Leiten von trockener Luft umfasst, das zwischen dem Bottich (55) und der Trommel (60) installiert ist, um Luft, die durch die Trocknungsvorrichtung (100) in Umlauf gebracht wird, in die Trommel (60) zu leiten.

10. Trommelwaschmaschine nach Anspruch 9, wobei das Element zum Leiten von trockener Luft eine Dichtung (64) umfasst, die zwischen dem Bottich (55) und der Trommel (60) installiert ist, um eine Öffnung abzudichten, die zwischen dem Bottich (55) und der Trommel (60) ausgebildet ist.

11. Trommelwaschmaschine nach einem der vorhergehenden Ansprüche, die ferner eine Kondensationsvorrichtung umfasst, die Folgendes umfasst:
- eine metallische Kondensationsplatte (125), die an einer Seite des Bottichs (55) installiert ist; und
- eine Kaltwasserzufuhr (122) zum Zuführen von kaltem Wasser zu der Kondensationsplatte (125) durch eine Eintrittsöffnung des Umluftkanals (110) oder des Bottichs (55), um die Feuchtigkeit in der Luft zu kondensieren.

## Revendications

1. Machine à laver de type à tambour comportant :
- une carrosserie (50) ;
- une cuve (55) disposée dans la carrosserie (50) et directement fixée à la carrosserie (50) ;
- un tambour (60) disposé dans la cuve (55) dans lequel un lavage est réalisé ; et **caractérisée en ce que**
- un dispositif de séchage (100) est disposé sur un côté supérieur de la cuve (55)
en sorte que le dispositif de séchage (100) s'étend à partir d'un côté supérieur arrière (55) jusqu'à un côté avant de la cuve (55) pour faire circuler de l'air dans le tambour et pour sécher du linge dans le tambour (60).

2. Machine à laver de type à tambour selon la revendication 1, dans laquelle le dispositif de séchage (100) comporte :
- une conduite de circulation (100) qui s'étend à partir du côté arrière de la cuve (55) jusqu'au côté avant de la cuve (55) ;
- un ventilateur de soufflage (130) installé dans la conduite de circulation (110) pour faire circuler de l'air de manière forcée ; et
- un élément chauffant (140) installé dans la conduite de circulation (110) pour chauffer l'air en circulation.

3. Machine à laver de type à tambour selon la revendication 2, dans laquelle la conduite de circulation comporte :
- une conduite d'entrée (111) qui s'étend à partir d'un côté supérieur arrière de la cuve (55) jusqu'au ventilateur de soufflage (130) ; et
- une conduite d'élément chauffant (113) dans laquelle est installé l'élément chauffant (140) qui s'étend à partir d'une conduite de sortie du ventilateur de soufflage (130) vers le côté avant de la cuve.

4. Machine à laver de type à tambour selon la revendication 3, dans laquelle la conduite de circulation comporte en outre une conduite de liaison (115) qui s'étend à partir de la conduite d'élément chauffant jusqu'au côté avant de la cuve (55).

5. Machine à laver de type à tambour selon l'une quelconque des revendications précédentes, comportant en outre :
- une alimentation en eau froide (122) pour fournir de l'eau froide à un intérieur de la cuve à travers un orifice d'entrée de la cuve (55) pour condenser l'humidité dans l'air.

6. Machine à laver de type à tambour selon l'une quelconque des revendications 3 à 5, dans laquelle la cuve (55) comporte en outre un support de conduite (150) pour supporter la conduite d'élément chauffant (113).

7. Machine à laver de type à tambour selon l'une quelconque des revendications précédentes, comportant en outre une garniture (58, 64) installée entre la cuve et le tambour pour empêcher des corps étrangers d'entrer dans un espace entre la cuve (55) et le tambour (60).

8. Machine à laver de type à tambour selon la revendication 7, dans laquelle un orifice de sortie (117) de la conduite de circulation (110) est positionné sur un côté supérieur de la garniture (58, 64).

9. Machine à laver de type à tambour selon l'une quelconque des revendications précédentes, comportant en outre un élément de guidage d'air sec installé entre la cuve (55) et le tambour (60) pour guider l'air en circulation par le dispositif de séchage (100) dans le tambour (60).

10. Machine à laver de type à tambour selon la revendication 9, dans laquelle l'élément de guidage d'air sec comporte une garniture (64) installée entre la cuve (55) et le tambour (60) pour étanchéifier une ouverture formée entre la cuve (55) et le tambour (60).

11. Machine à laver de type à tambour selon l'une quelconque des revendications précédentes, comportant en outre un dispositif de condensation qui comporte :
- une plaque de condensation en métal (125) installée sur un côté de la cuve (55) ; et
- une alimentation en eau froide (122) pour fournir de l'eau froide à la plaque de condensation (125) à travers un orifice d'entrée de la conduite de circulation (110) ou de la cuve (55) pour condenser l'humidité dans l'air.
